# EUROPÄISCHE PATENTANMELDUNG

(11) **EP 3 285 023 A2**
(43) Veröffentlichungstag der Anmeldung: **21.02.2018**
(21) Anmeldenummer: 17180887.6
(22) Anmeldetag: 12.07.2017
(51) Int. Cl.: F25B 5/00

(54) **VORRICHTUNG UND KLIMATISIERUNGSEINRICHTUNG**

(30) Priorität: 12.08.2016 DE 102016215051
(71) Anmelder: Robert Bosch GmbH, 70442 Stuttgart (DE)
(72) Erfinder: Eichenauer, Holger, 35447 Reiskirchen (DE); Meise, Max, 35390 Giessen (DE); Wuttke, Tim, 58706 Menden (DE); Dombrowsky, Uwe, 31079 Sibbesse (DE)

(57) **Zusammenfassung**

Die Erfindung betrifft eine Vorrichtung und eine Klimatisierungseinrichtung, wobei die Vorrichtung eine Elektronik und einer Wärmesenke umfasst, wobei die Wärmesenke mit der Elektronik thermisch gekoppelt ist, und ausgebildet ist, die Elektronik zu kühlen, wobei ein Mittel vorgesehen ist, wobei das Mittel ausgebildet ist, eine Kondensation von Feuchtigkeit aus einer Umgebung des Steuergeräts an der Elektronik zu vermeiden.

## Beschreibung

Die Erfindung betrifft eine Vorrichtung gemäß Patentanspruch 1 und eine Klimatisierungseinrichtung gemäß Patentanspruch 12.

### Stand der Technik

Es ist eine Klimatisierungseinrichtung mit einem elektrischen Zuheizer bekannt, wobei die Klimatisierungseinrichtung zusätzlich zum elektrischen Zuheizer einen Wärmepumpenkreislauf aufweist. Der Wärmepumpenkreislauf erwärmt ein Wärmeträgermedium für einen Heizkreislauf zur Beheizung des Gebäudes. Der elektrische Zuheizer dient dazu, das Wärmeträgermedium des Heizkreislaufs zusätzlich aufzuwärmen, wenn aufgrund von ungünstigen Wetterbedingungen der Wärmepumpenkreislauf eine zu geringe Heizleistung aufweist.

### Offenbarung der Erfindung

Es ist Aufgabe der Erfindung, eine verbesserte Vorrichtung und eine verbesserte Klimatisierungseinrichtung bereitzustellen.

Diese Aufgabe wird mittels einer Vorrichtung gemäß Patentanspruch 1 und mittels einer Klimatisierungseinrichtung gemäß Patentanspruch 12 gelöst. Vorteilhafte Ausführungsformen sind in den abhängigen Ansprüchen angegeben.

Es wurde erkannt, dass ein Vorrichtung dadurch bereitgestellt werden kann, dass die Vorrichtung eine Elektronik und eine Wärmesenke umfasst, wobei die Wärmesenke mit der Elektronik thermisch gekoppelt ist und ausgebildet ist, die Elektronik zu kühlen, wobei ein Mittel vorgesehen ist, wobei das Mittel ausgebildet ist, eine Kondensation von Feuchtigkeit aus einer Umgebung des Steuergeräts an der Elektronik zu vermeiden.

Diese Ausgestaltung hat den Vorteil, dass über die Lebensdauer der Vorrichtung hin Korrosion an der Elektronik vermieden wird. Dadurch kann eine besonders langzeitstabile Vorrichtung bereitgestellt werden.

In einer weiteren Ausführungsform weist die Vorrichtung einen Wärmetauscher mit einer Primärseite und einer Sekundärseite auf, wobei die Sekundärseite mit einem Wärmeträgermedium eines Klimatisierungskreislaufs der Klimatisierungseinrichtung füllbar ist, wobei die Elektronik mit der Primärseite thermisch gekoppelt ist, wobei das Mittel eine Kunststoffmatrix aufweist, wobei die Elektronik in der Kunststoffmatrix, vorzugsweise vollständig, eingebettet ist. Diese Ausgestaltung hat den Vorteil, dass die Feuchtigkeit sich an der Kunststoffmatrix und nicht an der Elektronik abscheidet.

In einer weiteren Ausführungsform weist die Vorrichtung einen Wärmetauscher und einen Eingang auf, das Mittel umfasst einen Bypass und ein Stellventil. Der Wärmetauscher weist eine Primärseite und eine Sekundärseite auf, wobei die Sekundärseite mit einem Wärmeträgermedium eines Klimatisierungskreislaufs der Klimatisierungseinrichtung füllbar ist, wobei der Bypass die Sekundärseite des Wärmetauschers überbrückt. Das Stellventil ist fluidisch mit der Sekundärseite, dem Bypass und mit dem Eingang verbunden. Das Stellventil weist wenigstens eine erste Ventilstellung und wenigstens eine zweite Ventilstellung auf, wobei in der ersten Ventilstellung das Stellventil ausgebildet ist, einen Strom des Wärmeträgermediums an die Sekundärseite des Wärmetauschers zu leiten und in der zweiten Ventilstellung den Strom des Wärmeträgermediums über den Bypass zu leiten. Dadurch wird bei einem Kühlbetrieb der Klimatisierungseinrichtung eine Kondensation von Feuchtigkeit an der Elektronik vermieden.

In einer weiteren Ausführungsform weist die Vorrichtung einen Wärmetauscher mit einer Primärseite und einer Sekundärseite auf, wobei die Sekundärseite mit einem Wärmeträgermedium eines Klimatisierungskreislaufs der Klimatisierungseinrichtung füllbar ist, wobei das Mittel eine Trenneinrichtung umfasst, wobei die Trenneinrichtung in einem ersten Zustand die Elektronik thermisch mit der Primärseite koppelt, wobei die Trenneinrichtung in einem zweiten Zustand eine Wärmeübertragung zwischen der Elektronik und der Primärseite gegenüber dem ersten Zustand reduziert. Dadurch kann im ersten Zustand beim Betrieb der Vorrichtung eine Wärme in das Wärmeträgermedium des Klimatisierungskreislaufs eingeleitet werden und im zweiten Zustand, beispielsweise wenn die Klimatisierungseinrichtung im Kühlbetrieb betrieben wird, eine Unterkühlung der Elektronik vermieden werden.

In einer weiteren Ausführungsform weist die Elektronik eine erste Kontaktfläche auf, wobei die Primärseite eine zweite Kontaktfläche aufweist, wobei im ersten Zustand die erste Kontaktfläche in einer ersten Position an der zweiten Kontaktfläche anliegt, wobei im zweiten Zustand die erste Kontaktfläche in einer zweiten Position angeordnet ist und zwischen der ersten Kontaktfläche und der zweiten Kontaktfläche ein Spalt angeordnet ist.

In einer weiteren Ausführungsform umfasst die Trenneinrichtung eine Koppeleinheit, wobei die Koppeleinheit ausgebildet ist, die erste Kontaktfläche zwischen der ersten Position und der zweiten Position zu bewegen, wobei die Koppeleinheit an einer ersten Seite mit dem Wärmetauscher und an einer zweiten Seite mit der Elektronik gekoppelt ist, oder wobei die Koppeleinheit sich an einem Gehäuse des Steuergeräts abstützt.

In einer weiteren Ausführungsform umfasst die Koppeleinheit einen Antrieb, wobei der Antrieb einen Piezostack und/oder einen Elektromotor und/oder einen Schrittmotor und/oder einen Elektromotor und/oder einen Elektromagneten umfasst. Zusätzlich oder alternativ kann die Koppeleinheit wenigstens einen Abschnitt aus Bimetall und/oder einer Formgedächtnislegierung aufweisen.

In einer weiteren Ausführungsform weist die Trenneinrichtung eine Führungseinheit mit einer Führungsschiene und einem Führungselement auf, wobei die Führungsschiene mit dem Wärmetauscher verbunden ist. Das Führungselement ist mit der Elektronik verbunden. Das Führungselement ist ferner mit der Führungsschiene verbunden. Die Führungsschiene führt das Führungselement entlang einer vordefinierten Bahn.

In einer weiteren Ausführungsform weist die Trenneinrichtung ein Federelement auf, wobei das Federelement bei einer Überführung der ersten Kontaktfläche von der zweiten Position in die erste Position gespannt wird, wobei das Federelement ausgebildet ist, die erste Kontaktfläche von der zweiten Kontaktfläche wegzudrücken.

In einer weiteren Ausführungsform weist die Trenneinrichtung wenigstens ein Reservoir auf, wobei das Reservoir zwischen der Elektronik und der Primärseite angeordnet ist, wobei in dem Reservoir ein Phasenwechselmaterial angeordnet ist. Das Phasenwechselmaterial weist einen ersten Phasenzustand oder einen zweiten Phasenzustand auf, wobei im zweiten Phasenzustand ein Wärmeübertragungskoeffizient des Phasenwechselmaterials geringer ist als im ersten Phasenzustand.

Von besonderem Vorteil ist, wenn das Phasenwechselmaterial wenigstens einen der folgenden Werkstoffe aufweist: Paraffin, Mikrowachs, Silikonöl, thermoplastischer Kunststoff, Natriumverbindungen wie beispielsweise Natriumacetat-Trihydrat.

In einer weiteren Ausführungsform weist die Klimatisierungseinrichtung die oben beschriebene Vorrichtung, einen Klimatisierungskreislauf und einen Wärmepumpenkreislauf auf, wobei der Klimatisierungskreislauf mit einem Wärmeträgermedium füllbar ist, wobei der Wärmepumpenkreislauf wenigstens einen weiteren Wärmetauscher umfasst, wobei der weitere Wärmetauscher eine weitere Sekundärseite aufweist. Die Sekundärseite und die weitere Sekundärseite sind mit dem Klimatisierungskreislauf verbunden. Die weitere Sekundärseite ist ausgebildet, dem Wärmeträgermedium Wärme zuzuführen oder abzuführen. Vorzugsweise ist der Wärmetauscher stromaufwärtsseitig des weiteren Wärmetauschers angeordnet.

Nachfolgend wird die Erfindung anhand von Figuren näher erläutert. Dabei zeigen:
Figur 1 eine schematische Darstellung einer Klimatisierungseinrichtung mit einer Vorrichtung gemäß einer ersten Ausführungsform und der Klimatisierungseinrichtung in einem ersten Betriebszustand;
Figur 2 eine schematische Darstellung der in Figur 1 gezeigten Klimatisierungseinrichtung in einem zweiten Betriebszustand;
Figur 3 einen Ausschnitt einer perspektivischen Darstellung der Vorrichtung;
Figur 4 eine schematische Darstellung einer Klimatisierungseinrichtung mit einer Vorrichtung gemäß einer zweiten Ausführungsform;
Figur 5 eine schematische Schnittansicht durch eine Vorrichtung gemäß einer dritten Ausführungsform;
Figur 6 eine schematische Schnittansicht durch eine Vorrichtung gemäß einer vierten Ausführungsform;
Figur 7 eine schematische Draufsicht auf eine Vorrichtung gemäß einer fünften Ausführungsform in einem ersten Zustand;
Figur 8 eine Draufsicht auf die in Figur 7 gezeigte Vorrichtung in einem zweiten Zustand;
Figur 9 eine Seitenansicht auf die in den Figuren 7 und 8 gezeigte Vorrichtung;
Figuren 10 und 11 jeweils eine Seitenansicht auf eine Variante der in Figuren 7 bis 9 gezeigten Vorrichtung;
Figur 12 eine perspektivische Darstellung einer Vorrichtung gemäß einer sechsten Ausführungsform; und
Figuren 13 und 14 eine Seitenansicht auf die in Figur 12 gezeigte Vorrichtung.

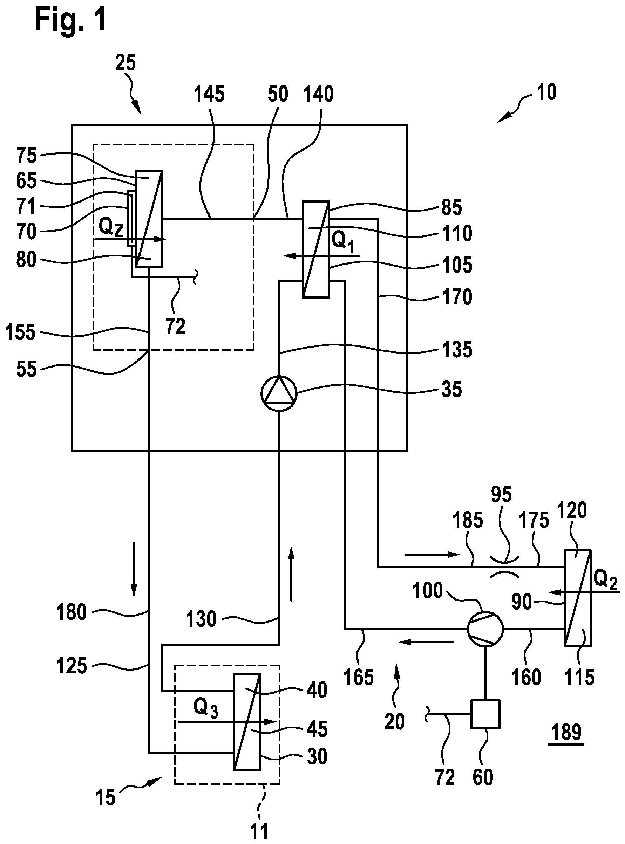

Figur 1 zeigt eine Klimatisierungseinrichtung 10 in einem ersten Betriebszustand. Die Klimatisierungseinrichtung 10 umfasst einen Klimatisierungskreislauf 15, einen Wärmepumpenkreislauf 20 und wenigstens eine Vorrichtung 25. Die Vorrichtung 25 ist gemäß einer ersten Ausführungsform ausgebildet.

Der Klimatisierungskreislauf 15 weist beispielhaft einen ersten Wärmetauscher 30 und eine Zirkulationspumpe 35 auf. Der erste Wärmetauscher 30 weist eine erste Primärseite 40 und eine erste Sekundärseite 45 auf. Der erste Wärmetauscher 30 ist beispielsweise in einem Raum 11 eines Gebäudes angeordnet. Dabei kann beispielsweise der erste Wärmetauscher 30 als Rohrleitung in einem Fußboden des Raums 11 eines Gebäudes ausgebildet sein. Auch kann der erste Wärmetauscher 30 als Deckenheizkörper oder als Wandheizkörper ausgebildet sein.

Die Vorrichtung 25 weist einen Eingang 50 und einen Ausgang 55 auf. Die Vorrichtung 25 weist einen zweiten Wärmetauscher 65 und eine Elektronik 71, beispielsweise in einem Steuergerät 70, auf. Der zweite Wärmetauscher 65 weist eine zweite Primärseite 75 und eine zweite Sekundärseite 80 auf.

Der Wärmepumpenkreislauf 20 weist einen dritten Wärmetauscher 85, einen vierten Wärmetauscher 90, eine Drossel 95 und einen Verdichter 100 auf. Der dritte Wärmetauscher 85 weist eine dritte Primärseite 105 und eine dritte Sekundärseite 110 auf. Der vierte Wärmetauscher 90 weist eine vierte Primärseite 115 und eine vierte Sekundärseite 120 auf.

Eingangsseitig ist der erste Wärmetauscher 30 an seiner ersten Primärseite 40 mit dem Ausgang 55 der Vorrichtung 25 mittels einer ersten Leitung 125 verbunden. Mittels einer zweiten Leitung 130 ist ausgangsseitig die erste Primärseite 40 mit der Zirkulationspumpe 35 verbunden. Ausgangsseitig ist die Zirkulationspumpe 35 mittels einer dritten Leitung 135 mit der dritten Sekundärseite 110 des dritten Wärmetauschers 85 verbunden. Ausgangsseitig ist die dritte Sekundärseite 110 mittels einer vierten Leitung 140 mit dem Eingang 50 der Vorrichtung 25 verbunden. Der Eingang 50 ist über eine fünfte Leitung 145 mit der zweiten Sekundärseite 80 des zweiten Wärmetauschers 65verbunden. Ausgangsseitig ist die zweite Sekundärseite 80 mit dem ersten Ausgang 55 mittels einer sechsten Leitung 155 verbunden.

Im Wärmepumpenkreislauf 20 ist der Verdichter 100 eingangsseitig über eine siebte Leitung 160 mit der vierten Sekundärseite 120 des vierten Wärmetauschers 90 verbunden. Ausgangsseitig ist der Verdichter 100 über eine achte Leitung 165 mit der dritten Primärseite 105 des dritten Wärmetauschers 85 verbunden. Ausgangsseitig ist die dritte Primärseite 105 über eine neunte Leitung 170 mit der Drossel 95 verbunden. Die Drossel 95 ist stromaufwärtsseitig der vierten Sekundärseite 120 angeordnet und über eine elfte Leitung 175 mit der vierten Sekundärseite 120 verbunden.

Der Klimatisierungskreislauf 15 ist mit einem ersten Wärmeträgermedium 180 befüllt. Das erste Wärmeträgermedium 180 kann beispielsweise Wasser aufweisen. Der Wärmepumpenkreislauf 20 ist mit einem zweiten Wärmeträgermedium 185 befüllt. Das zweite Wärmeträgermedium 185 kann beispielsweise ein Kältemittel, beispielsweise R134A, CO₂, Propan, Butan aufweisen.

Das Steuergerät 70 weist eine Elektronik 71 auf, die elektrisch mittels einer elektrischen Verbindung 72 mit einem Antriebsmotor 60 des Verdichters 100, oder mit einem hier nicht dargestellten Inverter für den Verdichter 100, oder mit einer sonstigen hier nicht dargestellten elektrischen Leistungskomponente wie beispielsweise einem Elektroheizstab verbunden ist. Die Elektronik 71 dient also beispielsweise dazu, stufenlos in Abhängigkeit einer durch den Antriebsmotor 60 bereitzustellenden Antriebsenergie eine elektrische Leistung des Antriebsmotors 60 zu regeln. Dabei produziert die Elektronik 71 Wärme. Die Elektronik 71 ist thermisch mit der zweiten Primärseite 75 gekoppelt.

In einem ersten Betriebszustand ist die Klimatisierungseinrichtung 10 im ersten Betriebszustand "Heizen" der zum Beheizen des Raums 11 dient. Dabei fördert der Verdichter 100 das zweite Wärmeträgermedium 185 im Kreislauf. Dabei strömt das zweite Wärmeträgermedium 185 vom Verdichter 100 unter hohem Druck hin zur dritten Primärseite 105 des dritten Wärmetauschers 85. Im dritten Wärmetauscher 85 überträgt der dritte Wärmetauscher 85 eine erste Wärme Q₁ des zweiten Wärmeträgermediums 185 an das erste Wärmeträgermedium 180 und erwärmt das erste Wärmeträgermedium 180 an der dritten Sekundärseite 110. Dabei wird das zweite Wärmeträgermedium 185 abgekühlt. Das abgekühlte zweite Wärmeträgermedium 185 strömt ausgangsseitig der dritten Sekundärseite 110 hin zur Drossel 95. An der Drossel 95 entspannt sich das zweite Wärmeträgermedium 185 und strömt über die elfte Leitung 175 hin zur vierten Sekundärseite 120. Die vierte Primärseite 115 ist mit einer Wärmequelle 189 thermisch verbunden. Die Wärmequelle 189 kann beispielsweise eine Umgebung des Gebäudes sein (Luft, Erdboden, Grundwasser). Im vierten Wärmetauscher 90 wird eine zweite Wärme Q₂ von der Wärmequelle 189 an das zweite Wärmeträgermedium 185 übertragen und vorzugsweise das zweite Wärmeträgermedium 185 verdampft. Das zweite Wärmeträgermedium 185 durchströmt die vierte Sekundärseite 120 und strömt über die achte Leitung 160 hin zum Verdichter 100.

Im Klimatisierungskreislauf 15 fördert die Zirkulationspumpe 35 das erste Wärmeträgermedium 180 ebenso im Kreislauf. Dabei fördert die Zirkulationspumpe 35 über die dritte Leitung 135 das erste Wärmeträgermedium 180 in die dritte Sekundärseite 110. In der dritten Sekundärseite 110 nimmt das erste Wärmeträgermedium 180 die vom zweiten Wärmeträgermedium 185 bereitgestellte erste Wärme Q₁ auf. Das erwärmte erste Wärmeträgermedium 180 verlässt die dritte Sekundärseite 110 und strömt über die vierte Leitung 140 in die Vorrichtung 25. Nach Durchströmen der fünften Leitung 145 tritt das erste Wärmeträgermedium 180 in den zweiten Wärmetauscher 65 ein.
Durch die stufenlose Regelung des Antriebsmotors 60 durch die Elektronik 71 erwärmt sich die Elektronik 71. Die Elektronik 71 stellt eine zusätzliche Wärme Q_{Z} bereit, die von der Elektronik 71 an die zweite Primärseite 75 des zweiten Wärmetauschers 65 übertragen wird. Der zweite Wärmetauscher 65 leitet die zusätzliche Wärme Q_{Z} an die zweite Sekundärseite 80. In der zweiten Sekundärseite 80 nimmt das erste Wärmeträgermedium 180 die Abwärme der Elektronik 71 auf, wodurch das erste Wärmeträgermedium 180 zusätzlich erwärmt wird und die Elektronik 71 gekühlt wird. Die zweite Sekundärseite 80 dient dabei als Wärmesenke gegenüber der zweiten Primärseite 75. Über die sechste Leitung 155 und die erste Leitung 125 strömt das warme erste Wärmeträgermedium 180 in die erste Primärseite 40. Im ersten Wärmetauscher 30 übergibt das erwärmte erste Wärmeträgermedium 180 eine dritte Wärme Q₃ an das Zimmer 11. Das abgekühlte erste Wärmeträgermedium 180 wird aus der ersten Primärseite 40 geführt und über die zweite Leitung 130 zu der Zirkulationspumpe 35 zurückgeführt.

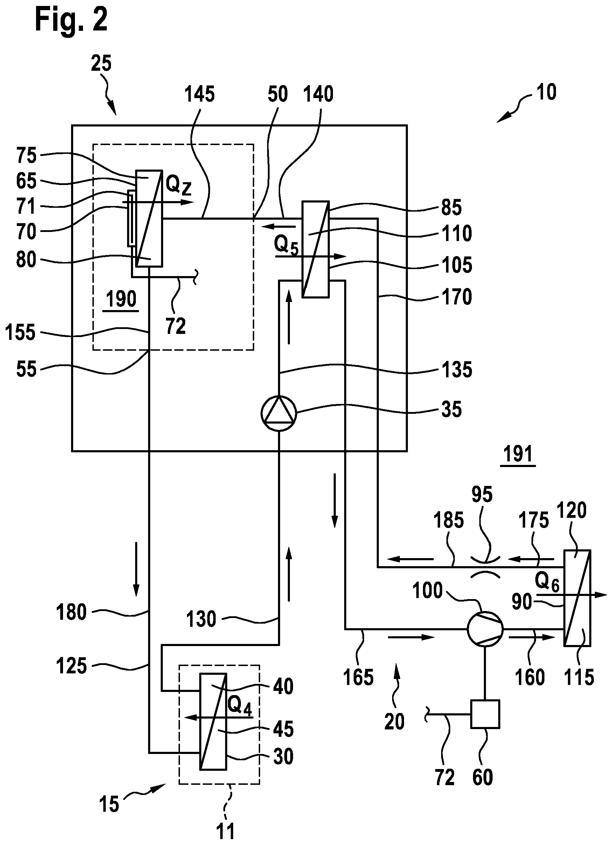

Figur 2 zeigt die in Figur 1 gezeigte Klimatisierungseinrichtung 10 in einem zweiten Betriebszustand.

Im zweiten Betriebszustand ist die Klimatisierungseinrichtung 10 im Betriebszustand "Kühlen" zum Kühlen des Raums 11. Im zweiten Betriebszustand ist im Wärmepumpenkreislauf 20 die Förderrichtung im Wärmepumpenkreislauf 20 gegenüber der in Figur 1 gezeigten Ausgestaltung in umgekehrter Richtung. Eine Umgebung des Gebäudes dient dabei nicht als Wärmequelle 189, sondern als Wärmesenke 191. Der Wärmestrom erfolgt in umgekehrter Richtung, sodass im Kühlbetrieb aus dem Raum 11 eine vierte Wärme Q₄ über die Klimatisierungseinrichtung 10 an eine Wärmesenke 191 übertragen wird. Als Wärmesenke 191 kann beispielsweise die Umgebung des Gebäudes dienen (Luft, Erdboden, Grundwasser). Im Folgenden wird jedoch der Einfachheit halber die Bezeichnung Primärseite und Sekundärseite der Wärmetauscher 30, 65, 85, 90, wie sie im ersten Betriebszustand (vgl. Figur 1) verwendet wurde, aufrechterhalten.

Die Strömungsrichtung im Klimatisierungskreislauf 15 wird in der Ausführungsform aufrechterhalten. Das erste Wärmeträgermedium 180 nimmt im ersten Wärmetauscher 30 die vierte Wärme Q₄ aus dem Raum 11 auf und kühlt eine Temperatur im Raum 11 ab. Das erwärmte erste Wärmeträgermedium 180 wird über die zweite Leitung 130 zur Zirkulationspumpe 35 zurückgeführt.

Im dritten Wärmetauscher 85 nimmt das zweite Wärmeträgermedium 185 eine fünfte Wärme Q₅ vom ersten Wärmeträgermedium 180 auf und kühlt das erste Wärmeträgermedium 180 ab.

Der Verdichter 100 fördert das zweite Wärmeträgermedium 185 über die siebte Leitung 160 in die vierte Sekundärseite 120. Dort wird eine sechste Wärme Q₆ von dem zweiten Wärmeträgermedium 185 im vierten Wärmetauscher 90 an die Wärmesenke 191 übertragen. Das zweite Wärmeträgermedium 185 wird dabei abgekühlt und verflüssigt. Das abgekühlte zweite Wärmeträgermedium 185 wird über die zehnte Leitung 175 zur Drossel 95 geführt. An der Drossel 95 wird das zweite Wärmeträgermedium 185 entspannt und über die neunte Leitung 170 in die dritte Primärseite 105 des dritten Wärmetauschers 85 geführt. Im dritten Wärmetauscher 85 nimmt das zweite Wärmeträgermedium 185 die fünfte Wärme Q₅ auf. Das erwärmte zweite Wärmeträgermedium 185 strömt aus dem dritten Wärmetauscher 85 über die achte Leitung 165 zurück zum Verdichter 100, der das zweite Wärmeträgermedium 185 wiederum verdichtet und weiter im Kreislauf fördert.

Dadurch, dass im Kühlbetrieb der zweite Wärmetauscher 65 mit kaltem ersten Wärmeträgermedium 180 durchströmt wird, wird die Elektronik 71 im Wesentlichen auf die Temperatur des ersten Wärmeträgermediums 180 abgekühlt. Die Elektronik 71 leitet die zusätzliche Wärme Qz über den zweiten Wärmetauscher 65 an das erste Wärmeträgermedium 180.

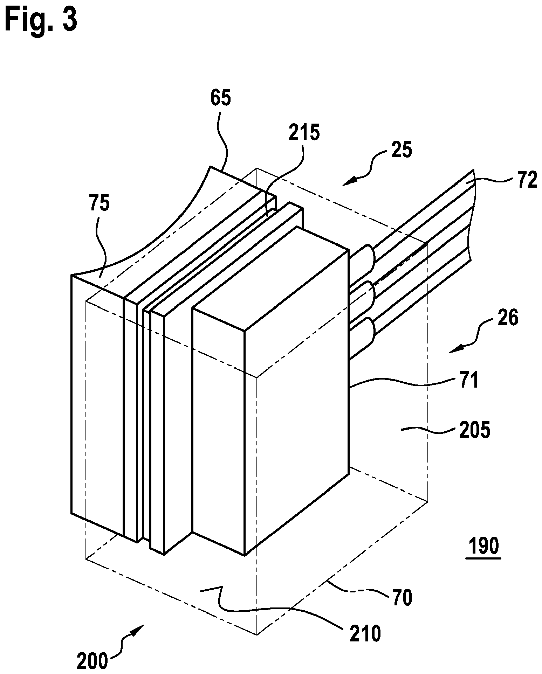

Figur 3 zeigt eine perspektivische Ansicht der Vorrichtung 25 gemäß einer ersten Ausführungsform. Um ein Beschlagen der Elektronik 71, insbesondere mit einem Kondensat, aufweisend Wasser, aus einer Umgebung 190 der Elektronik 71 im zweiten Betriebszustand (vgl. Figur 2) der Klimatisierungseinrichtung 10 zu verhindern, weist die Vorrichtung 25 ein Mittel 200 auf. Das Mittel 200 ist ausgebildet, die Kondensation von Feuchtigkeit aus einer Umgebung 190 der Vorrichtung 25 an der Elektronik 71 zu verhindern.

Das Mittel 200 weist eine Kunststoffmatrix 205 auf. In der Kunststoffmatrix 205 ist die Elektronik 71 in der Ausführungsform vorteilhafterweise vollständig eingebettet. Dabei erstreckt sich die Kunststoffmatrix 205 zwischen der zweiten Primärseite 75 des zweiten Wärmetauschers 65 bis über die Elektronik 71 auf einer zur zweiten Primärseite 75 abgewandten Seite hinweg. Durch die Kunststoffmatrix 205 ist die elektrische Verbindung 72 geführt, um die Elektronik 71 elektrisch zu verbinden. Auch die elektrische Verbindung 72 ist abschnittsweise in der Kunststoffmatrix 205 eingebettet. Ferner kann eine weitere elektrische Verbindung (nicht dargestellt) vorgesehen sein, um die Elektronik 71 beispielsweise mit einem Temperatursensor und/oder einer elektrischen Energieversorgung elektrisch zu verbinden. Dabei ist auch von Vorteil, wenn auch die weitere elektrische Verbindung zumindest abschnittsweise in der Kunststoffmatrix 205 eingebettet ist. Wird die Klimatisierungseinrichtung 10 im Kühlbetrieb (vgl. Figur 2) betrieben, so legt sich die Feuchtigkeit nicht an der Elektronik 71, sondern an einer äußeren Umfangfläche 210 der Kunststoffmatrix 205 an. Ferner wird im Heizbetrieb (vgl. Figur 1) eine zuverlässige Wärmeübertragung von der Elektronik 71 hin in die zweite Primärseite 75 sichergestellt. Dadurch weist die Klimatisierungseinrichtung 10 im Heizbetrieb einen besonders hohen Wirkungsgrad auf.

Von besonderem Vorteil ist hierbei, wenn die Kunststoffmatrix 205 ein Kunstharz aufweist. Von besonderem Vorteil ist, wenn die Kunststoffmatrix 205 wenigstens ein Polyurethan, vorzugsweise ein Polyurethan UR aufweist. Von besonderem Vorteil ist, wenn die Kunststoffmatrix 205 elektrisch isolierend, vorzugsweise verträglich mit einem Aluminiumwerkstoff sowie elektrischen Bauteilen ist, vorzugsweise nicht brennbar und zumindest bis zu einer Temperatur von 120 °C wärmestabil ist. Von besonderem Vorteil ist, wenn die Kunststoffmatrix 205 keine Feuchtigkeit in der Kunststoffmatrix 205 aufnimmt.

In der Ausführungsform ist zusätzlich ein Befestigungsmittel 215 vorgesehen, um die Elektronik 71 thermisch leitend mit der zweiten Primärseite 75 zu verbinden. Das Befestigungsmittel 215 kann dabei stoffschlüssig und/oder formschlüssig und/oder kraftschlüssig die Elektronik 71 mit der zweiten Primärseite 75 verbinden.

Die in Figur 3 gezeigte Ausgestaltung der Vorrichtung 25 hat den Vorteil, dass ein hoher Wärmetransport aus der Elektronik 71 in den zweiten Wärmetauscher 65 sichergestellt ist. Ferner kann die Vorrichtung 25 umfangsseitig vollständig isoliert werden und als komplette Einheit geliefert werden. Ferner schlägt sich die Feuchtigkeit ausschließlich an der äußeren Umfangsfläche 210 der Kunststoffmatrix 205 nieder und verhindert eine Beschädigung der Elektronik 71.

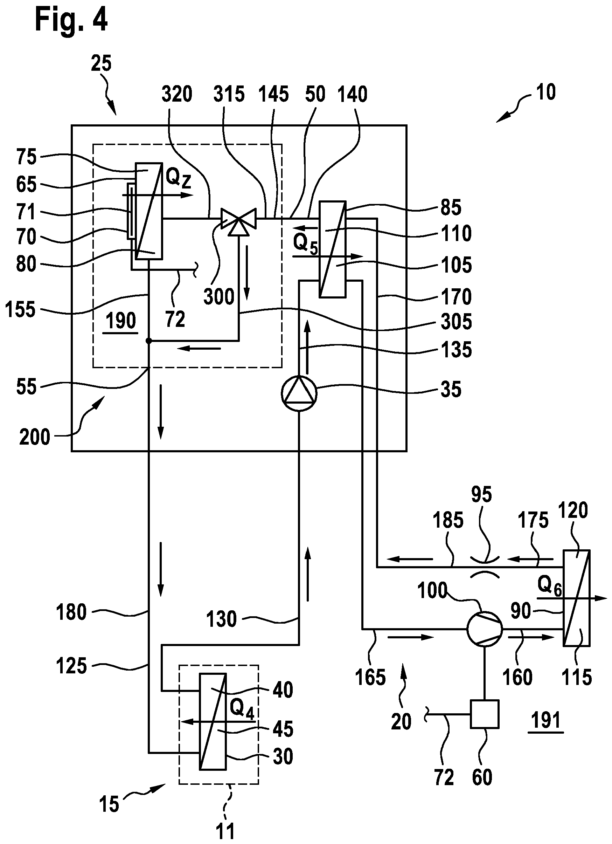

Figur 4 zeigt eine Klimatisierungseinrichtung 10 im zweiten Betriebszustand mit einer Vorrichtung 25 gemäß einer zweiten Ausführungsform.

Die Vorrichtung 25 ist ähnlich zu der in den Figuren 1 bis 3 beschriebenen Ausgestaltung ausgebildet. Abweichend dazu umfasst das Mittel 200 ein Stellventil 300 und einen Bypass 305. Das Stellventil 300 ist beispielsweise als Zwei-/Dreiwegeventil ausgebildet. Das Stellventil 300 weist eine erste Ventilstellung und eine zweite Ventilstellung auf.

Das Stellventil 300 ist in der fünften Leitung 145 angeordnet. Die fünfte Leitung 145 weist durch das Vorsehen des Stellventils 300 einen ersten Abschnitt 315 und einen zweiten Abschnitt 320 auf. Der erste Abschnitt 315 ist zwischen dem Eingang 50 und dem Stellventil 300 angeordnet. Der zweite Abschnitt 320 ist zwischen dem Stellventil 300 und dem zweiten Wärmetauscher 65 angeordnet. Der Bypass 305 mündet an der sechsten Leitung 155 an einer ersten Seite und ist an einer zweiten Seite mit dem Stellventil 300 verbunden. Der Bypass 305 überbrückt den zweiten Wärmetauscher 65.

In der ersten Ventilstellung des Stellventils 300 ist der Bypass 305 deaktiviert. Dabei durchströmt das erste Wärmeträgermedium 180 die Vorrichtung 25 wie für die Figuren 1 und 2 beschrieben. Von besonderem Vorteil ist, wenn im ersten Betriebszustand der Klimatisierungseinrichtung 10 das Stellventil 300 in die erste Ventilstellung geschaltet ist.

Ferner ist von Vorteil, dass das Stellventil 300 in die zweite Ventilstellung geschaltet werden kann, wenn die Klimatisierungseinrichtung 10, wie in Figur 2 beschrieben, im zweiten Betriebszustand betrieben wird. In der zweiten Ventilstellung, die in Figur 4 gezeigt ist, ist der Bypass 305 aktiviert. Dabei ist der erste Abschnitt 315 der fünften Leitung 145 fluidisch von dem zweiten Abschnitt 320 getrennt. Das erste Wärmeträgermedium 180 wird an dem zweiten Wärmetauscher 65 vorbeigeführt. Dabei durchströmt das erste Wärmeträgermedium 180 den ersten Abschnitt 315 und den Bypass 305 und mündet in der sechsten Leitung 155.

Diese Ausgestaltung hat den Vorteil, dass das kalte erste Wärmeträgermedium 180 wahlweise gar nicht, nur zeitweise (zum Beispiel intermittierend) oder ständig an die Elektronik 71 geführt werden kann und somit eine Abkühlung der Elektronik 71 auf ein zu kaltes Temperaturniveau zuverlässig vermieden wird. Dadurch kann eine Kondensation von Feuchtigkeit aus der Umgebung 190 des Steuergeräts 70 an der Elektronik 71 zuverlässig vermieden werden.

Es wird darauf hingewiesen, dass die Vorrichtung des Stellventils 300 und des Bypasses 305 beispielhaft ist. Selbstverständlich ist auch denkbar, dass das Stellventil 300 außerhalb der Vorrichtung 25 angeordnet ist und die Vorrichtung 25 vollständig durch den Bypass 305 und das Stellventil 300 überbrückt wird. Auch kann das Stellventil 300 in der sechsten Leitung 155 angeordnet sein und ausschließlich der zweite Wärmetauscher 65 durch das Stellventil 300 und den Bypass 305 überbrückt werden.

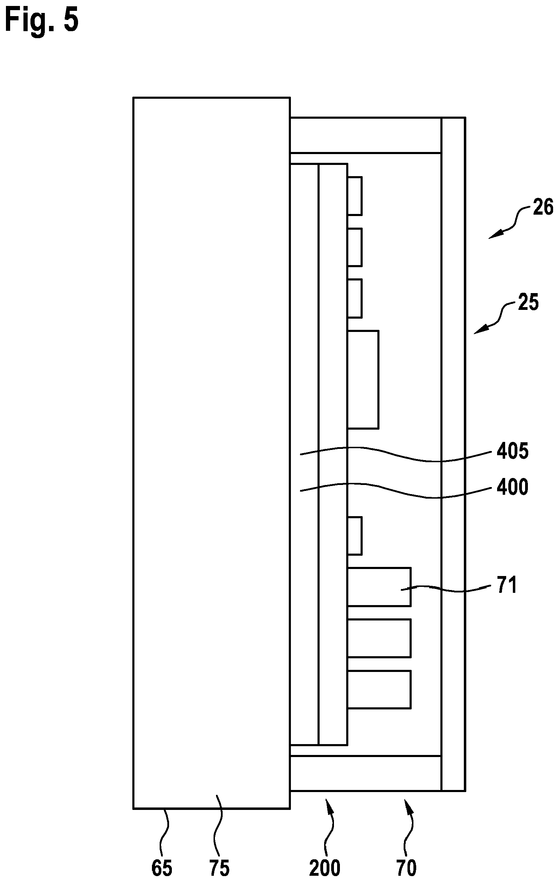

Figur 5 zeigt eine Schnittansicht durch eine Vorrichtung 25 gemäß einer dritten Ausführungsform.

Die Vorrichtung 25 ist ähnlich zu dem in den Figuren 1 bis 4 gezeigten Vorrichtung 25 ausgebildet. Abweichend dazu weist das Mittel 200 in der Ausführungsform ein Reservoir 400 auf. Das Reservoir 400 ist zwischen der zweiten Primärseite 75 und der Elektronik 71 angeordnet. In dem Reservoir 400 ist ein Phasenwechselmaterial 405 angeordnet. Das Phasenwechselmaterial 405 umfasst beispielhaft wenigstens einen der folgenden Werkstoffe: Paraffin, Microwachs, Silikonöl, thermoplastischer Kunststoff, Natriumverbindungen wie Natriumacetat-Trihydrat.

Das Phasenwechselmaterial 405 ist in der Ausführungsform derart gewählt, dass das Phasenwechselmaterial 405 einen Phasenwechsel zwischen einem ersten Phasenzustand und einem zweiten Phasenzustand bei einer Temperatur durchführt, die zwischen der Temperatur des ersten Wärmeträgermediums 180 im ersten Betriebszustand und einer zweiten Temperatur des ersten Wärmeträgermediums 180 im zweiten Betriebszustand der Klimatisierungseinrichtung 10 liegt. Alternativ ist von Vorteil, wenn der Phasenwechsel zwischen dem ersten Phasenzustand und dem zweiten Phasenzustand bei einer Temperatur von 70 °C bis 90 °C erfolgt.

Von besonderem Vorteil ist hierbei, wenn im ersten Betriebszustand der Klimatisierungseinrichtung 10, also wenn die Klimatisierungseinrichtung 10 im Heizbetrieb geschaltet ist, das Phasenwechselmaterial 405 einen flüssigen ersten Phasenzustand und im zweiten Betriebszustand der Klimatisierungseinrichtung 10 das Phasenwechselmaterial 405 in einem zweiten Phasenzustand einen festen Phasenzustand aufweist. Alternativ ist auch denkbar, dass im ersten Phasenzustand das Phasenwechselmaterial 405 gasförmig und im zweiten Phasenzustand das Phasenwechselmaterial 405 flüssig ist. Dabei ist von besonderem Vorteil, wenn im zweiten Phasenzustand ein Wärmeübertragungskoeffizient des Phasenwechselmaterials 405 geringer, vorzugsweise deutlich geringer, beispielsweise wenigstens zweimal, vorzugsweise wenigstens fünfmal geringer, als im ersten Phasenzustand des Phasenwechselmaterials 405 ist.

Diese Ausgestaltung hat den Vorteil, dass beim Betrieb der Klimatisierungseinrichtung 10 im zweiten Betriebszustand zum Kühlen des Raums 11 das Phasenwechselmaterial 405 im Reservoir 400 im zweiten Phasenzustand, beispielsweise im festen Phasenzustand, vorliegt, bei dem das Phasenwechselmaterial 405 einen geringen Wärmeübertragungskoeffizienten aufweist und somit nur wenig Wärme aus der Elektronik 71 an die zweite Primärseite 75 des zweiten Wärmetauschers 65 geführt wird und somit die Elektronik 71 nur geringfügig abgekühlt wird. Somit weist die Elektronik 71 eine höhere Temperatur als das erste Wärmeträgermedium 180 im zweiten Betriebszustand der Klimatisierungseinrichtung 10 auf, sodass eine Kondensation von Feuchtigkeit aus der Umgebung 190 des Steuergeräts 70 vermieden und/oder reduziert werden kann. Insbesondere hat diese Ausgestaltung den Vorteil, dass das Mittel 200 langzeitlich stabil ausgebildet ist und keine beweglichen Komponenten erfordert.

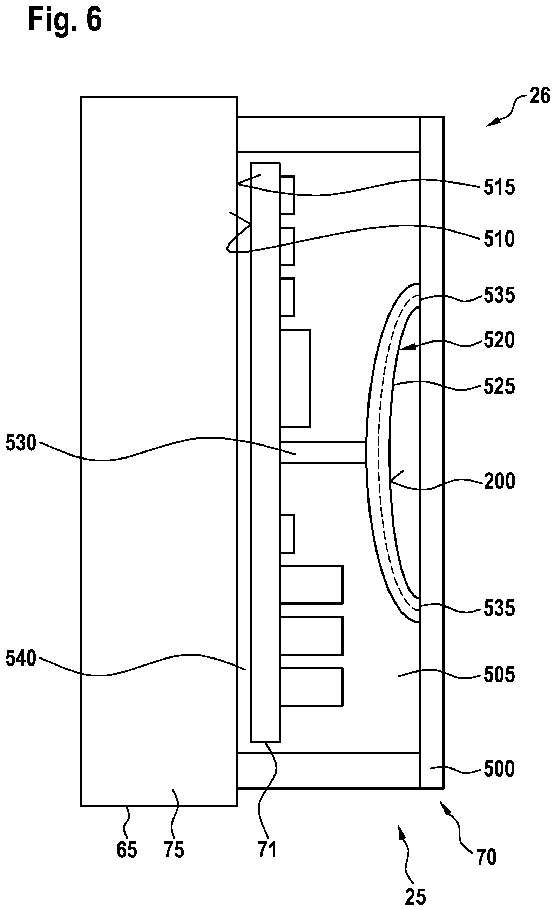

Figur 6 zeigt eine Schnittansicht durch eine Vorrichtung 25 gemäß einer vierten Ausführungsform.

Die Vorrichtung 25 ist ähnlich zu dem in den Figuren 1 bis 5 gezeigten Vorrichtung 25 ausgebildet. Abweichend dazu ist das Mittel 200 andersartig ausgebildet.

Das Steuergerät 70 weist ein Gehäuse 500 auf. Das Gehäuse 500 ist an der zweiten Primärseite 75 des zweiten Wärmetauschers 65 angeordnet. Das Gehäuse 500 begrenzt einen Gehäuseinnenraum 505. In dem Gehäuseinnenraum 505 ist die Elektronik 71 angeordnet. Die Elektronik 71 weist auf einer zur zweiten Primärseite 75 zugewandten Seite eine erste Kontaktfläche 510 auf. Ferner weist die zweite Primärseite 75 auf einer der Elektronik 71 zugewandten Seite eine zweite Kontaktfläche 515 auf. Das Mittel 200 weist eine Trenneinrichtung 520 auf. Die Trenneinrichtung 520 weist eine Koppeleinheit 525 und ein Führungselement 530 auf. Das Führungselement 530 koppelt die Elektronik 71 mit der Koppeleinheit 525.

In der Ausführungsform ist die Koppeleinheit 525 bogenförmig ausgebildet und stützt sich an jeweils zwei Enden 535 an dem Gehäuse 500 des Steuergeräts 70 ab. Zwischen den beiden Enden 535 ist die Koppeleinheit 525 bogenförmig geführt. Etwa in mittiger Lage auf einer zur Elektronik 71 zugewandten Seite ist das Führungselement 530 mit der Koppeleinheit 525 gekoppelt.

Die Koppeleinheit 525 weist in der Ausführungsform eine Feder aus Bimetall auf. Die Koppeleinheit 525 verformt sich in Abhängigkeit einer Temperatur in dem Gehäuseinnenraum 505. Dabei ist die Koppeleinheit 525 ausgebildet, die Elektronik 71 zwischen einer ersten Position und einer zweiten Position zu bewegen. In einer ersten Position drückt die Koppeleinheit 525 die erste Kontaktfläche 510 an die zweite Kontaktfläche 515 und koppelt thermisch die Elektronik 71 mit der zweiten Primärseite 75. Dabei ist von besonderem Vorteil, wenn die Koppeleinheit 525 dies im ersten Betriebszustand der Klimatisierungseinrichtung 10 durchführt. Dabei ist der Gehäuseinnenraum 505 aufgewärmt, sodass das Bimetall der Koppeleinheit 525 sich ebenso im warmen Zustand befindet und sich in der ersten Position befindet. Ferner wird der Gehäuseinnenraum 505 durch die Elektronik 71 erwärmt, sodass zusätzlich die Koppeleinheit 525 durch die Elektronik 71 erwärmt wird.

Wird die Klimatisierungseinrichtung 10 im zweiten Betriebszustand betrieben, so wird der Gehäuseinnenraum 505 durch die zweite Primärseite 75 abgekühlt. Durch die Abkühlung verformt sich das Bimetall der Koppeleinheit 525 und überführt die Elektronik 71 aus der ersten Position in eine zweite Position. In der zweiten Position ist die erste Kontaktfläche 510 beabstandet zur zweiten Kontaktfläche 515 angeordnet, wobei zwischen der ersten Kontaktfläche 510 und der zweiten Kontaktfläche 515 ein Spalt 540 angeordnet ist. Durch den Spalt 540 wird eine Wärmeübertragung zwischen der Elektronik 71 und der zweiten Primärseite 75 im Wesentlichen vermieden. Dadurch wird eine zu starke Abkühlung der Elektronik 71 vermieden, sodass eine Kondensation von Feuchtigkeit aus der Umgebung 190 an der Elektronik 71 zuverlässig vermieden werden kann. Alternativ ist auch denkbar, dass die Koppeleinheit 525 anstatt Bimetall eine Formgedächtnislegierung, beispielsweise Austenit oder Martensit, aufweist.

Ferner ist von Vorteil, wenn die Koppeleinheit 525 über das Führungselement 530 thermisch mit der Elektronik 71 gekoppelt ist. Dadurch kann eine zuverlässige Erwärmung der Koppeleinheit 525 im ersten Betriebszustand der Klimatisierungseinrichtung 10sichergestellt werden.

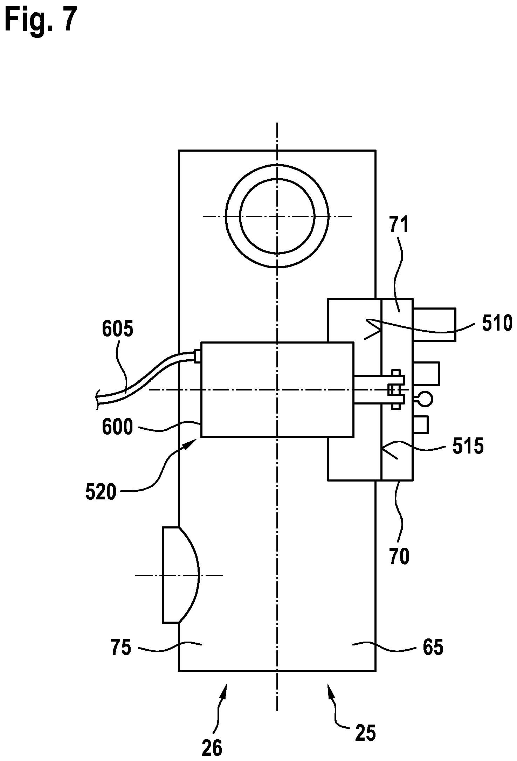

Figur 7 zeigt eine Seitenansicht auf eine Vorrichtung 25 gemäß einer fünften Ausführungsform.

Die Vorrichtung 25 ist ähnlich zu der in Figur 6 gezeigten Vorrichtung 25 ausgebildet. Abweichend dazu weist die Koppeleinheit 525 einen Antrieb 600 auf. Der Antrieb 600 ist mittels einer weiteren elektrischen Verbindung 605 mit dem Steuergerät 70 verbunden. Der Antrieb 600 weist beispielsweise einen Piezostack und/oder einen Elektromotor, insbesondere einen Schrittmotor auf. Der Antrieb 600 verfährt die Elektronik 71 zwischen der ersten Position, wie in Figur 7 gezeigt, an der die erste Kontaktfläche 510 an der zweiten Kontaktfläche 515 anliegt und die Elektronik 71 thermisch mit der zweiten Primärseite 75 koppelt.

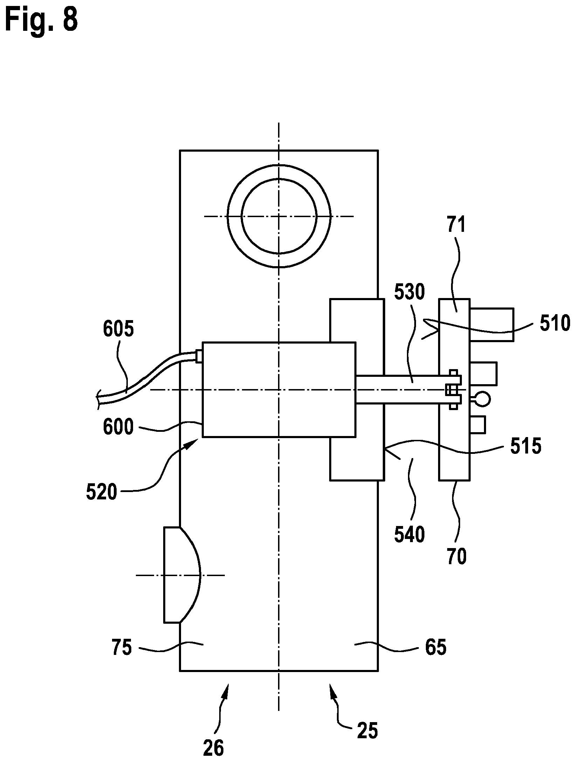

Figur 8 zeigt eine Seitenansicht auf die in Figur 7 gezeigte Vorrichtung in der zweiten Position der Elektronik 71. In der zweiten Position ist die erste Kontaktfläche 510 beabstandet zu der zweiten Kontaktfläche 515 angeordnet, wobei zwischen der ersten Kontaktfläche 510 und der zweiten Kontaktfläche 515 der Spalt 540 vorgesehen ist.

Von besonderem Vorteil ist hierbei, wenn der Spalt 540 wenigstens 1 mm, wenigstens 20 mm, vorzugsweise wenigstens 30 mm, insbesondere wenigstens größer 40 mm und kleiner 10 cm ist. Dadurch wird eine kompakte Ausgestaltung der Vorrichtung 25 sichergestellt und gleichzeitig die Wärmeübertragung zwischen der ersten Kontaktfläche 510 und der zweiten Kontaktfläche 515 vermieden, sodass in der zweiten Position die Elektronik 71 im Wesentlichen eine Temperatur der Umgebung 190 aufweist.

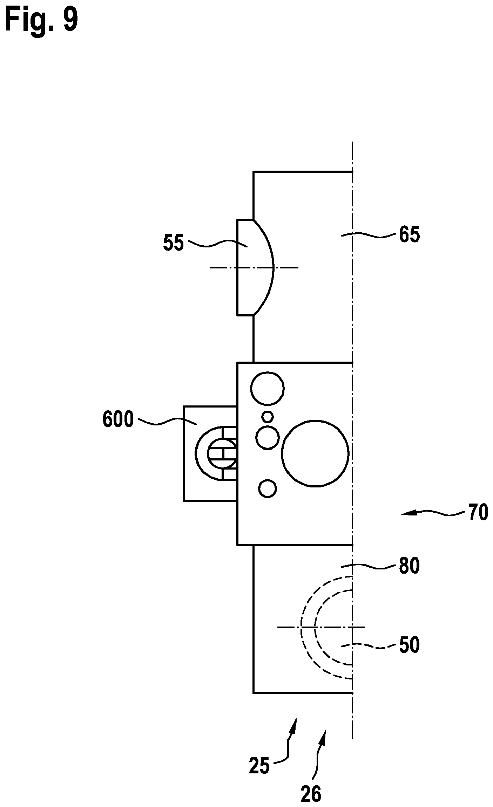

Figur 9 zeigt eine Seitenansicht auf die in Figuren 7 und 8 gezeigte Vorrichtung 25. Der Antrieb 600 ist direkt angrenzend am zweiten Wärmetauscher 65 befestigt. Dadurch kann eine seitliche Erstreckung der Vorrichtung 25 gering gehalten werden. Von besonderem Vorteil ist hierbei, wenn das Steuergerät 70 zwischen dem Eingang 50 und dem Ausgang 55 der Vorrichtung 25 angeordnet ist.

Durch die Verwendung von Piezostacks für den Antrieb 600 kann eine hohe Anpresskraft zum Anpressen der ersten Kontaktfläche 510 an die zweite Kontaktfläche 515 sichergestellt werden. Auf diese Weise kann ein hoher Wärmeübergang zwischen den beiden Kontaktflächen 510, 515 sichergestellt werden, sodass die durch die Elektronik 71 erzeugte Abwärme zuverlässig in die zweite Primärseite 75 abgeführt werden kann und so das erste Wärmeträgermedium 180 weiter erwärmt werden kann.

Die Ausgestaltung des Antriebs 600 mit einem Schrittmotor und/oder einem Elektromotor hat den Vorteil, dass der Spalt 540 breit gehalten werden kann. Ferner kann ein zuverlässiges Anfahren der beiden Positionen durch eine Ausgestaltung des Antriebs 600 mit einem Schrittmotor sichergestellt werden.

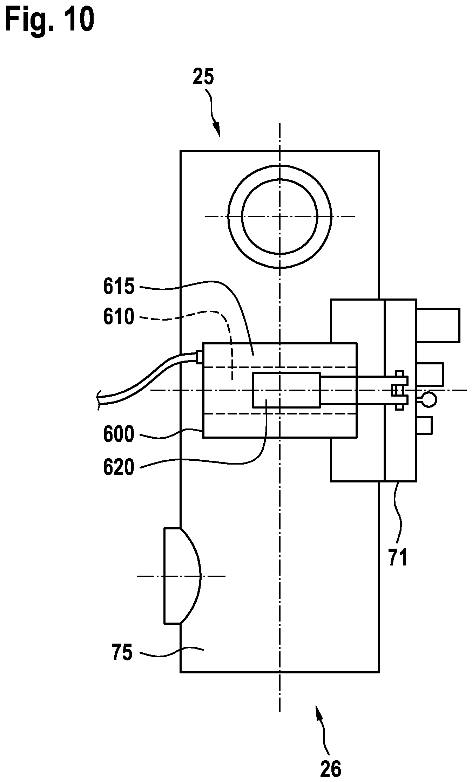

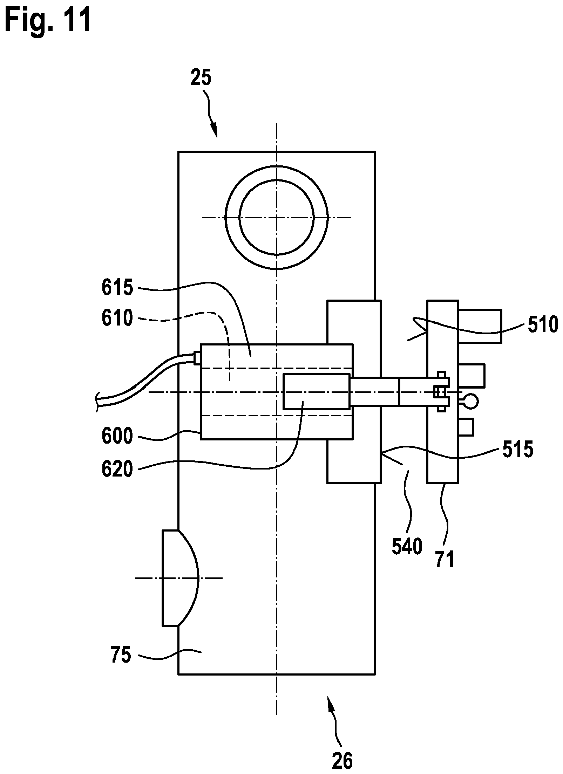

Figur 10 zeigt eine Seitenansicht auf eine Variante der in Figur 7 gezeigten Vorrichtung 25 mit der Elektronik 71 in der ersten Position. Figur 11 zeigt eine Seitenansicht auf eine Variante der in Figur 8 gezeigten Vorrichtung 25 mit der Elektronik 71 in der zweiten Position.

Alternativ zu dem in Figuren 7 bis 9 gezeigten Antrieb 600 ist auch denkbar, dass der Antrieb 600 einen Elektromagneten 610 aufweist, wobei der Elektromagnet 610 die Elektronik 71 zwischen der ersten Position und der zweiten Position verfährt. Elektromagnet 610 weist beispielsweise eine Spule 615 und einen Permanentmagneten 620 auf, wobei die Spule 615 beispielsweise hohlzylindrisch ausgebildet ist und der Permanentmagnet 620 in einem Spuleninnenraum 625 angeordnet ist. Wird die Spule 615 mit einer ersten Polung bestromt so verfährt der Permanentmagnet 620 in die erste Postition und nimmt die Elektronik 71 mit. Wird die Spule 615 mit einer zweiten Polung, die umgekehrt zur ersten Polung ist bestromt, so wird der Permanentmagnet in die zweite Position verfahren. Der Permanentmagnet nimmt die Elektronik 71 mit, so dass die Elektronik beabstandet zur zweiten Primärseite 75 angeordnet ist.

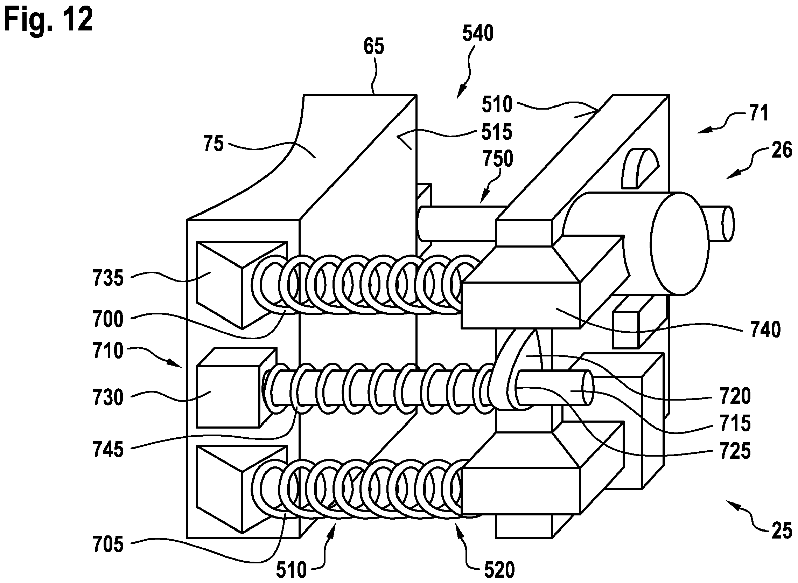

Figur 12 zeigt eine perspektivische Darstellung eines Ausschnitts einer Vorrichtung 25 gemäß einer sechsten Ausführungsform.

Die Vorrichtung 25 ist ähnlich zu dem in den Figuren 1 bis 9 beschriebenen Vorrichtung 25 ausgebildet. Abweichend dazu weist die Koppeleinheit 525 ein erstes Formgedächtniselement 700 und beispielhaft ein zweites Formgedächtniselement 705 auf. Das Formgedächtniselement 700, 705 ist beispielhaft schraubenförmig ausgebildet. Zwischen dem ersten Formgedächtniselement 700 und dem zweiten Formgedächtniselement 705 ist eine Führungseinheit 710 angeordnet. Das Formgedächtniselement 705, 710 weist vorzugsweise eine Formgedächtnislegierung, beispielsweise Austenit oder Martensit, auf.

Die Führungseinheit 710 weist wenigstens eine Führungsschiene 715 und ein Führungselement 720 auf. Das Führungselement 720 ist mit der Elektronik 71 verbunden. Das Führungselement 720 umgreift in der Ausführungsform beispielhaft die Führungsschiene 715. Die Führungsschiene 715 ist in der Ausführungsform beispielhaft zylindrisch ausgebildet, wobei das Führungselement 720 eine Bohrung 725 aufweist, durch die die Führungsschiene 715 geführt ist. Die Führungsschiene 715 führt das Führungselement 720 während eine Verschiebung der Elektronik 71 zwischen der ersten Position und der zweiten Position entlang einer vordefinierten Bahn.

Auf einer zur Elektronik 71 abgewandten Seite ist die Führungsschiene 715 über ein erstes Befestigungselement 730 mit der zweiten Primärseite 75 des zweiten Wärmetauschers 65 verbunden. Ferner ist für jedes Formgedächtniselement 700, 705 jeweils ein zweites Befestigungselement 735 und ein drittes Befestigungselement 740 vorgesehen. Das dritte Befestigungselement 740 ist mit der Elektronik 71 sowohl mechanisch als auch thermisch gekoppelt. Das zweite Befestigungselement 735 ist mit der zweiten Primärseite 75 verbunden. Von besonderem Vorteil ist hierbei, wenn zumindest das zweite und/oder das dritte Befestigungselement 735, 740 thermisch leitend ausgebildet ist.

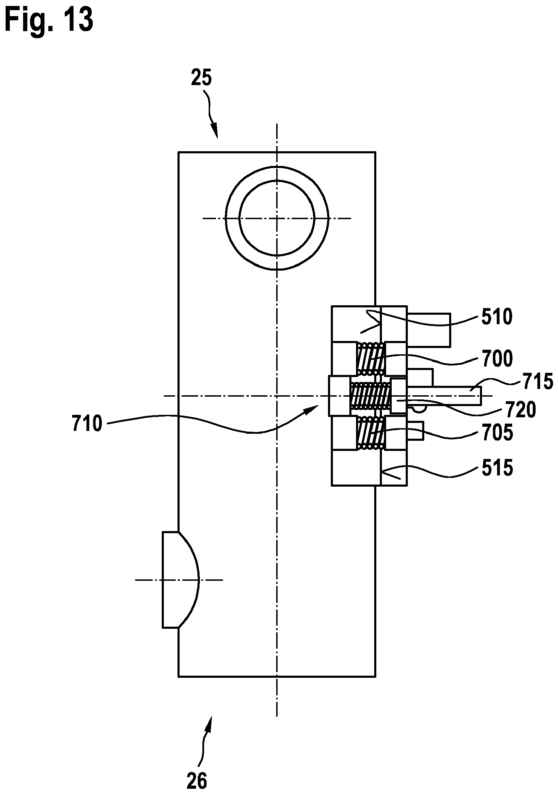

Figur 13 zeigt eine Seitenansicht auf den in Figur 12 gezeigten Vorrichtung 25.

Ferner weist die Trenneinrichtung 520 ein Federelement 745 auf. Das Federelement 745 stützt sich an einer ersten Seite am ersten Befestigungselement 730 und an einer zweiten Seite am Führungselement 720 ab. Das Federelement 745 ist in der Ausführungsform als Schraubenfeder ausgebildet und wird beispielhaft von der Führungsschiene 715 durchgriffen.

Zusätzlich kann dazu das in Figur 10 gezeigte Federelement 745 vorgesehen sein, um die Elektronik 71 von der ersten Position in die zweite Position rückzuführen.

In Figur 13 befindet sich die Elektronik 71 in der ersten Position, so dass die Kontaktflächen 510, 515 aneinander anliegen.

Zur stabilisierten Führung der Elektronik 71 zwischen der ersten Position und der zweiten Position kann zusätzlich eine weitere Führungseinheit 750 vorgesehen sein, die beispielhaft in Figur 10 rückwärtig nach hinten versetzt ist, sodass die Elektronik 71 zwischen der ersten Führungseinheit 710 und der weiteren Führungseinheit 750 angeordnet ist.

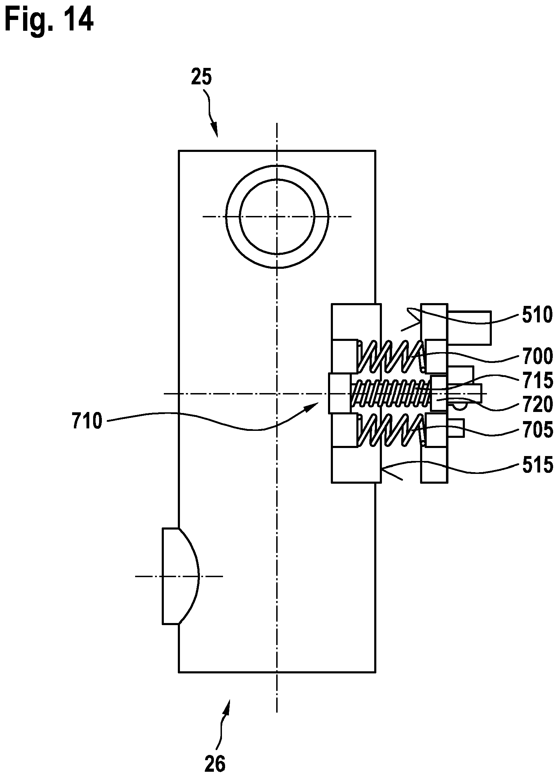

Figur 14 zeigt eine Seitenansicht auf die in Figur 12 gezeigte Vorrichtung 25. In Figur 14 befindet sich die Elektronik 71 in der zweiten Position, so dass die Kontaktflächen 510, 515 aneinander beabstandet angeordnet sind.

Wird der Antriebsmotor 60 aktiviert, so erwärmt sich die Elektronik 71. Dabei wird das Formgedächtniselement 700, 705 durch das dritte Befestigungselement 740 erwärmt. Von der anderen Seite her wird das Formgedächtniselement 700, 705 durch das zweite Befestigungselement 735 von der zweiten Primärseite 75 erwärmt. Durch die Erwärmung wird die Elektronik 71 von der zweiten Position (wie sie in den Figuren 10 und 12 gezeigt ist) in die erste Position überführt, wobei der Spalt 540 zwischen der ersten Kontaktfläche 510 und der zweiten Kontaktfläche 515 aufgehoben wird und die erste Kontaktfläche 510 in der ersten Position an der zweiten Kontaktfläche 515 anliegt. Dabei wird das Federelement 745 gespannt. Wird der Antriebsmotor 60 deaktiviert, so kühlt auch die Elektronik 71 ab. Mit der Abkühlung einher geht auch eine Abkühlung des Formgedächtniselements 700, 705, sodass durch die Abkühlung das Formgedächtniselement 700, 705 das Formgedächtniselement 700, 705 sich längt und durch das vorgespannte Federelement 745 die Elektronik 71 von dem zweiten Wärmetauscher 65 weggedrückt wird. Dadurch wird der Berührkontakt zwischen der ersten Kontaktfläche 510 und der zweiten Kontaktfläche 515 aufgehoben wird.

In der Ausführungsform ist beispielhaft an dem weiteren Führungselement 750 kein weiteres Federelement vorgesehen. Selbstverständlich kann ein Federelement ebenso an der weiteren Führungseinheit 750 vorgesehen sein. Auch ist denkbar, dass auf die weitere Führungseinheit 750 verzichtet wird. Auch kann das Formgedächtniselement 700, 705 zumindest abschnittsweise Bimetall als Werkstoff aufweisen.

Es wird darauf hingewiesen, dass die in den Figuren 1 bis 14 gezeigten Merkmale der Vorrichtung 25 selbstverständlich auch andersartig ausgebildet werden können. Insbesondere ist auch denkbar, dass die Trennung und Verschiebung zur Erzeugung des Spalts 540 zwischen der ersten Kontaktfläche 510 und der zweiten Kontaktfläche 515 andersartig ausgebildet ist. Auch können die in den Figuren 1 bis 14 gezeigten Merkmale selbstverständlich auch untereinander kombiniert werden oder einzelne Merkmale entsprechend weggelassen werden.

## Patentansprüche

1. Vorrichtung mit einer Elektronik (71) und einer Wärmesenke (80),
- wobei die Wärmesenke (80) mit der Elektronik (71) thermisch gekoppelt ist, und ausgebildet ist, die Elektronik (71) zu kühlen,
- **dadurch gekennzeichnet, dass**
- ein Mittel (200) vorgesehen ist,
- wobei das Mittel (200) ausgebildet ist, eine Kondensation von Feuchtigkeit aus einer Umgebung (190) des Steuergeräts (70) an der Elektronik (71) zu vermeiden.

2. Vorrichtung (25) nach Anspruch 1,
- aufweisend einen Wärmetauscher (65) mit einer Primärseite (75) und einer Sekundärseite (80),
- wobei die Sekundärseite (80) mit einem Wärmeträgermedium (180) (10) füllbar ist,
- wobei die Elektronik (71) mit der Primärseite (75) thermisch gekoppelt ist,
- wobei das Mittel (200) eine Kunststoffmatrix (205) umfasst,
- wobei die Elektronik (71) in der Kunststoffmatrix (205), vorzugsweise vollständig, eingebettet ist.

3. Vorrichtung (25) nach Anspruch 1,
- aufweisend einen Wärmetauscher (65) und einen Eingang (50),
- wobei das Mittel (200) einen Bypass (305) und ein Stellventil (300) umfasst,
- wobei der Wärmetauscher (65) eine Primärseite (75) und eine Sekundärseite (80) umfasst,
- wobei die Sekundärseite (80) mit einem Wärmeträgermedium (180) (10) füllbar ist,
- wobei der Bypass (305) die Sekundärseite (80) überbrückt,
- wobei das Stellventil (300) fluidisch mit der Sekundärseite (80), dem Bypass (305) und dem Eingang (50) verbunden ist,
- wobei das Stellventil (300) wenigstens eine erste Ventilstellung und wenigstens eine zweite Ventilstellung umfasst,
- wobei das Stellventil (300) ausgebildet ist, in der ersten Ventilstellung einen Strom des Wärmeträgermediums (180) an die Sekundärseite (80) des Wärmetauschers (65) zu leiten und in der zweiten Ventilstellung den Strom des Wärmeträgermediums (180) über den Bypass (305) zu leiten.

4. Vorrichtung (25) nach Anspruch 1,
- aufweisend einen Wärmetauscher (65) mit einer Primärseite (75) und einer Sekundärseite (80),
- wobei die Sekundärseite (80) mit einem Wärmeträgermedium (180) (10) füllbar ist,
- wobei das Mittel (200) eine Trenneinrichtung (520) umfasst,
- wobei die Trenneinrichtung (520) in einem ersten Zustand die Elektronik (71) thermisch mit der Primärseite (75) koppelt,
- wobei die Trenneinrichtung (520) in einem zweiten Zustand eine Wärmeübertragung zwischen der Elektronik (71) und der Primärseite (75) gegenüber dem ersten Zustand reduziert.

5. Vorrichtung (25) nach Anspruch 4,
- wobei die Elektronik (71) eine erste Kontaktfläche (510) umfasst,
- wobei die Primärseite (75) eine zweite Kontaktfläche (515) aufweist,
- wobei im ersten Zustand die erste Kontaktfläche (510) in einer ersten Position an der zweiten Kontaktfläche (515) anliegt,
- wobei im zweiten Zustand die erste Kontaktfläche (510) in einer zweiten Position angeordnet ist und zwischen der ersten Kontaktfläche (510) und der zweiten Kontaktfläche (515) ein Spalt angeordnet ist.

6. Vorrichtung (25) nach Anspruch 4 oder 5,
- wobei die Trenneinrichtung (520) eine Koppeleinheit (525) umfasst,
- wobei die Koppeleinheit (525) ausgebildet ist, die erste Kontaktfläche (510) zwischen der ersten Position und der zweiten Position zu bewegen,
- wobei die Koppeleinheit (525) an einer ersten Seite mit dem Wärmetauscher (65) und an einer zweiten Seite mit der Elektronik (71) gekoppelt ist,
- oder wobei die Koppeleinheit (525) sich an einem Gehäuse (500) des Steuergeräts (70) abstützt.

7. Vorrichtung (25) nach Anspruch 6,
- wobei die Koppeleinheit (525) einen Antrieb (600) umfasst,
- wobei der Antrieb (600) einen Piezostack und/oder einen Elektromotor und/oder einen Schrittmotor und/oder einen Elektromagneten (610) umfasst,
- und/oder
- wobei die Koppeleinheit (525) wenigstens abschnittsweise Bimetall und/oder eine Formgedächtnislegierung als Werkstoff aufweist.

8. Vorrichtung (25) nach einem der Ansprüche 4 bis 7,
- wobei die Trenneinrichtung (520) eine Führungseinheit (710) mit einer Führungsschiene (715) und einem Führungselement (530, 720) umfasst,
- wobei die Führungsschiene (715) mit dem Wärmetauscher (65) verbunden ist,
- wobei das Führungselement (530, 720) mit der Elektronik (71) verbunden ist,
- wobei das Führungselement (530, 720) mit der Führungsschiene (715)verbunden ist,
- wobei die Führungsschiene (715) das Führungselement (530, 720) entlang einer vordefinierten Bahn führt.

9. Vorrichtung (25) nach einem der Ansprüche 5 bis 8,
- wobei die Trenneinrichtung (520) ein Federelement (745) umfasst,
- wobei das Federelement (745) bei einer Überführung der ersten Kontaktfläche (510) von der zweiten Position in die erste Position gespannt wird,
- wobei das Federelement (745) ausgebildet ist, die erste Kontaktfläche (510) von der zweiten Kontaktfläche (515) wegzudrücken.

10. Vorrichtung (25) nach Anspruch 4,
- wobei das Mittel (200) wenigstens ein Reservoir (400) aufweist,
- wobei das Reservoir (400) zwischen der Elektronik (71) und der Primärseite (75) angeordnet ist,
- wobei in dem Reservoir (400) ein Phasenwechselmaterial (405) angeordnet ist,
- wobei im ersten Zustand das Phasenwechselmaterial (405) einen ersten Phasenzustand aufweist,
- wobei im zweiten Zustand das Phasenwechselmaterial (405) einen zweiten Phasenzustand aufweist,
- wobei im zweiten Phasenzustand ein Wärmeübertragungskoeffizient des Phasenwechselmaterials (405) geringer ist als im ersten Phasenzustand.

11. Vorrichtung (25) nach Anspruch 10,
- wobei das Phasenwechselmaterial (405) wenigstens einen der folgenden Werkstoffe aufweist: Paraffin, Mikrowachs, Silikonöl, thermoplastischer Kunststoff, Natriumverbindungen wie Natriumacetat-Trihydrat.

12. Klimatisierungseinrichtung (10),
- mit einer Vorrichtung (25), einem Klimatisierungskreislauf (15) und einem Wärmepumpenkreislauf (20),
- wobei die Vorrichtung (25) nach einem der vorhergehenden Ansprüche ausgebildet ist,
- wobei der Klimatisierungskreislauf (15) mit einem Wärmeträgermedium (180) füllbar ist,
- wobei der Wärmepumpenkreislauf (20) wenigstens einen weiteren Wärmetauscher (85) umfasst,
- wobei der weitere Wärmetauscher (85) eine weitere Sekundärseite (110) aufweist,
- wobei die Sekundärseite (80) und die weitere Sekundärseite (110) mit dem Klimatisierungskreislauf (15) verbunden ist,
- wobei die weitere Sekundärseite (110) ausgebildet ist, dem Wärmeträgermedium (180) eine weitere Wärme (Q₁, Q₃, Q₅) zuzuführen oder abzuführen,
- wobei vorzugsweise der Wärmetauscher (65) stromabwärtsseitig des weiteren Wärmetauschers (85) angeordnet ist.
